# EUROPEAN PATENT APPLICATION

(11) **EP 4 376 209 A1**
(43) Date of publication of application: **29.05.2024**
(21) Application number: 22944045.8
(22) Date of filing: 21.10.2022
(51) Int. Cl.: H01M 50/536

(54) **CELL PACK AND POWER BATTERY**

(30) Priority: 11.10.2022 CN 202222673846 U
(71) Applicant: Eve Power Co., Ltd., Jingmen, Hubei 448000 (CN)
(72) Inventor: LIN, Chenneng, Jingmen, Hubei 448000 (CN)
(74) Representative: Nederlandsch Octrooibureau
(86) International application number: PCT/CN2022/126554
(87) International publication number: WO 2024/077652

(57) **Abstract**

The present application provides a core and a power battery, which belong to the field of battery. The core includes a body and a plurality of layers of pole tabs. An end of the plurality of layers of pole tabs is connected to the body, and another end is configured to be connected to a pole post of a battery. The plurality of layers of pole tabs are welded to form a first welding print, which is disposed at a root of the pole tabs and close to the body to enable the plurality of layers of pole tabs to gather up. The core and the power battery of the present application completely gather the end of the pole tabs close to the body, solving the problem of difficulty in shaping the pole tabs and avoiding a short circuit caused by the pole tabs being reversely inserted into the body.

## Description

This application claims the priority to Chinese Patent Application No. 202222673846.4 filed on October 11, 2022. The aforementioned application is herein incorporated by reference in its entirety.

### TECHNICAL FIELD

The present application relates to the field of battery, for example, to a core and a power battery.

### BACKGROUND

In related art, a core includes a body and a plurality of layers of pole tabs connected to the body. During an assembly process of a battery, the pole tabs are welded to a pole post disposed on a top cover, and then the pole tabs are reshaped and installed into a shell and the top cover of the battery to maximize utilization of internal space, which improves the battery density. However, an end of the pole tabs close to the body cannot be completely gathered up, especially outermost one or more layers of the pole tabs are difficult to gather up, resulting in difficulty in reshaping the pole tabs, thus, the pole tabs are easily inserted into the body reversely, which causes a short circuit.

### SUMMARY

The present application provides a core and a power battery, which completely gathers an end of pole tabs close to a body, solves the problem of difficulty in shaping the pole tabs, and avoids a short circuit caused by the pole tabs being reversely inserted into the body.

In a first aspect, embodiments of the present application provide a core, which includes a body and a plurality of layers of pole tabs. An end of the plurality of layers of pole tabs is connected to the body, and another end of the plurality of layers of pole tabs is configured to be connected to a pole post of a battery. The plurality of layers of pole tabs are welded to form a first welding print, and the first welding print is disposed at a root of the pole tabs and close to the body to enable the plurality of layers of pole tabs to gather up.

In some embodiments, a thickness of the first welding print may be defined as B₁, and a thickness of the body may be defined as B, in which B₁ and B may satisfy a following equation: Bi=B-Xi, and a value of X₁ may range from 2 mm to 5 mm; and/or
a length of the first welding print may be defined as L₁, and a length of a welding print generated by a welding tool may be defined as L, in which L₁ and L may satisfy a following equation: L₁=L+Y₁, and a value of Y₁ may range from 4 mm to 6 mm.

In some embodiments, the plurality of layers of pole tabs may be welded to form a second welding print, the second welding print and the first welding print may be spaced apart, and the pole tabs may be connected to the pole post through the second welding print.

In some embodiments, a spacing distance between the second welding print and the first welding print may range from 4 mm to 6 mm.

In some embodiments, a length of the second welding print and the length of the first welding print may be same; and/or
a width of the second welding print may be defined as C₂, a number of second welding prints may be defined as N, and a width of a welding print generated by the welding tool may be defined as C, in which C₂, N, and C may satisfy a following equation: C₂=N*C+(N-1)*1.5+Z₂, and a value of Z₂ may range from 2 mm to 4 mm.

In some embodiments, the pole tabs may be reshaped in a V-shape, and an angle may be formed between the first welding print and the second welding print.

In some embodiments, when the pole tabs may be positive pole tabs, a fusing hole may be provided between the first welding print and the second welding print.

In some embodiments, a cross-sectional area of an opening region of the fusing hole may be defined as A, a minimum cross-sectional area of the pole tabs meeting an overcurrent current may be defined as A₁, and a maximum cross-sectional area of the pole tabs when fusing under a short-circuit current may be defined as A₂, in which A, A₁, and A₂ may satisfy a following equation: A₁≤A≤A₂.

In some embodiments, a protective adhesive layer may be attached onto the pole tabs and a separator of the body.

In some embodiments, a length of the protective adhesive layer facing the pole tabs and exceeding the separator may range from 15 mm to 30 mm, and a width of the protective adhesive layer may be not less than a width of the pole tabs; and/or
the protective adhesive layer may cover the first welding print and the fusing hole, and a spacing distance between the protective adhesive layer and the second welding print may range from 1 mm to 2 mm.

In a second aspect, embodiments of the present application provide a power battery, which includes a shell, a top cover assembly, and any of the above-mentioned core, in which the core is disposed in an accommodation space formed by the shell and the top cover assembly, and the pole tabs of the core are connected to the pole post on the top cover assembly.

### Beneficial effects according to the present application:

The present application provides the core and the power battery, in which the design of the first welding print makes the root of the plurality of layers of pole tabs gather up. After the core is installed into the shell, the pole tabs are reshaped. Due to the effect of the first welding print, the plurality of layers of pole tabs are reshaped simultaneously to avoid the short circuit caused by the fact that the plurality of layers of pole tabs scatter and are inversely inserted into the body, thereby improving reliability. Moreover, the plurality of layers of pole tabs can be folded according to a size of the first welding print, without the need for shaping of a single-layer pole tab, which is convenient for folding and shaping.

### BRIEF DESCRIPTION OF THE DRAWINGS

FIG. 1 is a cross-sectional view of a core provided by some specific embodiments of the present application.
FIG. 2 is a lateral view of pole tabs before shaping provided by some specific embodiments of the present application.
FIG. 3 is a lateral view of the pole tabs after shaping provided by some specific embodiments of the present application.

In the drawings:
1, pole tab; 11, positive pole tab; 12, negative pole tab; 2, first welding print; 3, second welding print; 4, fusing hole; 5, protective adhesive layer; 6, body; 61, positive electrode sheet; 62, negative electrode sheet; 63, separator.

### DETAILED DESCRIPTION OF THE EMBODIMENT

In the description of the present application, unless otherwise specified and limited, the terms "fix", "link" or "connect" are to be construed in a broad sense, for example, as fixedly connected, detachably connected, or integrated; mechanically connected or electrically connected; directly connected to each other or indirectly connected to each other via an intermediary; or internally connected between two elements or interacted between two elements. Meanings of the preceding terms in the present application may be understood according to situations by an ordinary person in the art.

In the present application, unless otherwise specified and limited, when a first feature is described as "on" or "under" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

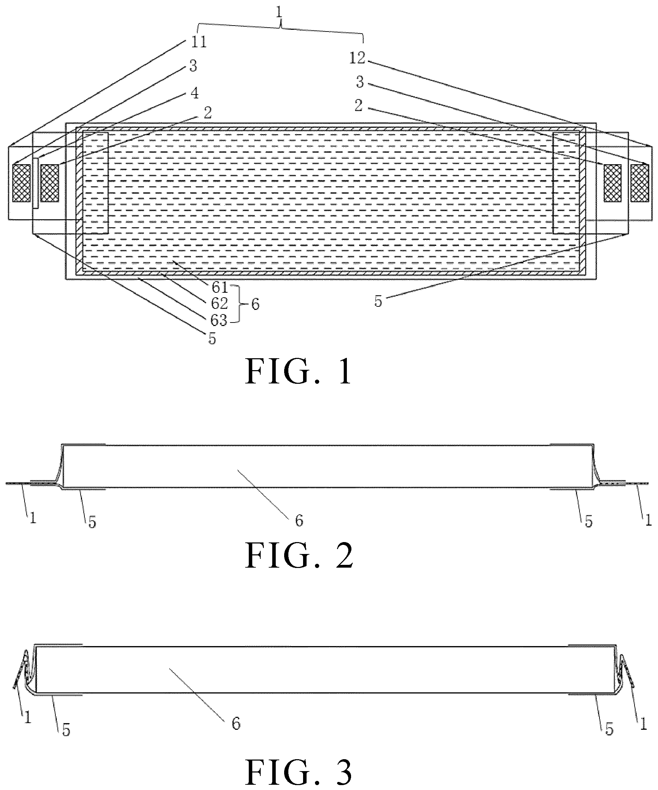

Embodiments of the present application provide a power battery, as shown in FIG. 1, which includes a shell, a top cover assembly, and a core. The core is disposed in an accommodation space formed by the shell and the top cover assembly. The pole tabs 1 in the core are connected to a pole post on the top cover assembly. Referring to FIG. 1, embodiments of the present application further provide the core, which includes a body 6 and a plurality of layers of pole tabs 1. One end of the plurality of layers of pole tabs 1 is connected to the body 6, and the other end of the plurality of layers of pole tabs 1 is configured to be connected to the pole post of the battery. The plurality of layers of pole tabs 1 are welded to form a first welding print 2, and the first welding print 2 is disposed at the root of the pole tabs 1 and close to the body 6 to enable the plurality of layers of pole tabs 1 to gather up.

The design of the first welding print 2 makes the root of the plurality of layers of pole tabs 1 gather up. After the core is installed into the shell, the pole tabs 1 are reshaped. Due to the effect of the first welding print 2, the plurality of layers of pole tabs 1 are reshaped simultaneously to avoid a short circuit caused by the fact that the plurality of layers of pole tabs 1 scatter and are inversely inserted into the body 6, thereby improving reliability. Moreover, the plurality of layers of pole tabs 1 can be folded according to a size of the first welding print 2, without the need for shaping of a single-layer pole tab, which is convenient for folding and shaping.

In some embodiments, as shown in FIG. 1, the plurality of layers of pole tabs 1 are welded to form a second welding print 3. The second welding print 3 and the first welding print 2 are spaced apart. The second welding print 3 is configured to be connected to the pole post, and the second welding print 3 gathers the pole tabs 1 into a whole to be welded to the pole post, which improves strength.

In some embodiments, as shown in FIG.S 1 to 3, the pole tabs 1 are reshaped in a V-shape based on the sizes of the first welding print 2 and the second welding print 3, so that an angle is formed between the first welding print 2 and the second welding print 3, and then the core is installed into the shell. The first welding print 2 is close to the body 6, and the second welding print 3 is welded to the pole post. The pole tabs 1 are reshaped in the V-shape before they are installed into the shell, and there is no need for additional shaping after they are installed into the shell, which makes it convenient for shaping. At present, most of the pole tabs 1 are reshaped to be bent into a Z-shape. Due to the two wider welding print structures of the pole tabs 1, it is convenient for the pole tabs 1 to be bent into the V-shape. Moreover, the pole tabs 1 bent into the V-shape has one layer less than the pole tabs 1 bent into the Z-shape, which improves the space utilization of the core in a length direction and increases capacity.

As shown in FIG.S 1 to 3, two ends of the body 6 are respectively provided with a positive pole tab 11 and a negative pole tab 12. The positive pole tab 11 is a multi-layer aluminum foil without coating an active substance, and the negative pole tab 12 is a multi-layer copper foil without coating an active substance, both of which have better conductivity to provide an electronic channel for charging and discharging of the battery.

In some embodiments, flat tooth welding, circular tooth welding, or square tooth welding can be used to weld the pole tabs 1 to form the first welding print 2, but is not limited thereto.

In some embodiments, a thickness of the first welding print 2 is defined as B₁, and a thickness of the body 6 is defined as B, B₁ and B satisfy the following equation: B₁=B-Xi, in which a value of X₁ ranges from 2 mm to 5 mm. The specific thickness of the first welding print 2 can be designed according to the thickness of the body 6, and the value of X₁ can be selected according to the actual situation, which are not limited here. In some embodiments, a length of the first welding print 2 is defined as L₁, and a length of a welding print generated by a welding tool is defined as L, L₁ and L satisfy the following equation: L₁=L+Y₁, in which a value of Y₁ ranges from 4 mm to 6 mm. The specific length of the first welding print 2 can be designed according to the length of the welding print during a laser welding process. The value of Y₁ can be selected according to the actual situation, which is not limited here, as long as it can ensure that there is no cracking of the pole tabs 1 after welding, and the plurality of layers of pole tabs 1 are welded together. The thickness and length of the first welding print 2 should avoid being too large that causes difficulty in installing into the shell, and also avoid being too small that causes poor shaping effect.

In some embodiments, flat tooth welding can be used to weld the pole tabs 1 to form the second welding print 3. In some embodiments, a spacing distance between the second welding print 3 and the first welding print 2 ranges from 4 mm to 6 mm, which can ensure sufficient spacing to shape the pole tabs 1 into the V-shape, avoid too large spacing that may cause the sizes of the first welding print 2 and the second welding print 3 to be too small, and also avoid too small spacing that makes it difficult to shape, which causes a large angle between the first welding print 2 and the second welding print 3, ultimately occupying a large space. In some embodiments, a length of the second welding print 3 is the same as the length of the first welding print 2. A width of the second welding print 3 is defined as C₂, a number of second welding prints 3 is defined as N, and a width of a welding print generated by the welding tool is defined as C, C₂, N, and C satisfy the following equation: C₂=N*C+(N-1)*1.5+Z₂, in which a value of Z₂ ranges from 2 mm to 4 mm. The value of Z₂ can be designed according to the width and number of the welding prints generated during the laser welding process. The specific Z₂ is a redundancy value, which can effectively ensure the overflow and maximize the use of space. The specific value of Z₂ can be selected according to the actual situation, for example, Z₂ is 3 mm, which is not limited here.

In some embodiments, as shown in FIG. 1, when the pole tabs 1 are positive pole tabs 11, a fusing hole 4 is provided between the first welding print 2 and the second welding print 3. Specifically, the fusing hole 4 is a through hole. The fusing hole 4 is preferably disposed in a middle between the first welding print 2 and the second welding print 3. When the first welding print 2 and the second welding print 3 are centered and facing each other, a middle region without weld flux is punched using a mold. A shape of the fusing hole 4 can be but not limited to rectangular, ellipse, or the like, which can reduce a cross-sectional area of the pole tabs 1 in a width direction. Due to the small cross-sectional area and large local resistance at the fusing hole 4, when an external short circuit occurs, a local temperature of the fusing hole 4 rises sharply under the ultra-high current until it reaches the melting temperature of aluminum and then fuses, so as to protect the core from reaching a thermal runaway state, which can improve the safety performance of the core, and avoid punching in the welding region of the first welding print 2 or the second welding print 3 to avoid fracture of the pole tabs 1 in a bending state. In some embodiments, a cross-sectional area of an opening region of the fusing hole 4 is defined as A, a minimum cross-sectional area of the pole tabs 1 meeting an overcurrent current is defined as A₁, and a maximum cross-sectional area of the pole tabs 1 when fusing under a short-circuit current is defined as A₂, and A, A₁, and A₂ satisfy the following equation: A₁≤A≤A₂.

In some embodiments, as shown in FIG. 1, the body 6 includes a positive electrode sheet 61, a negative electrode sheet 62, and a separator 63. The positive electrode sheet 61 is coated with a positive active substance, which releases and receives lithium ions during charging and discharging processes of the battery, and undergoes electrochemical reaction at a solid-liquid interface of the positive active substance. The negative electrode sheet 62 is coated with a negative active substance, which receives and releases lithium ions during the charging and discharging processes of the battery, and undergoes electrochemical reaction at a solid-liquid interface of the negative active substance. The separator 63 is a thin film made of polyethylene (PE), polypropylene (PP) or composite materials of the two, which have the function of conducting ions and isolating electrons. The positive electrode sheet 61, the negative electrode sheet 62, and the separator 63 can be formed by winding or other methods.

In some embodiments, as shown in FIG. 1, a protective adhesive layer 5 is attached onto the separator 63 of the pole tabs 1 and the body 6. The protective adhesive layer 5 has sufficient strength, viscosity, resistance to electrolyte corrosion, and high temperature resistance. The protective adhesive layer 5 can be but not limited to a high-temperature adhesive with acrylic brown. The protective adhesive layer 5 is attached onto the pole tabs 1, which can effectively avoid the short circuit caused by the connection between the pole tabs 1 and the shell made of aluminum. The protective adhesive layer 5 is attached onto the separator 63 of the body 6, which can effectively prevent the short circuit caused by the negative electrode sheet 62 directly contacting the shell made of aluminum when the separator 63 is vented outward, and can also insulate the core and the top cover assembly to prevent the short circuit. In some embodiments, a length of the protective adhesive layer 5 facing the pole tabs 1 and exceeding the separator 63 ranges from 15 mm to 30 mm, and a width of the protective adhesive layer 5 is not less than the width of the pole tabs 1, so that the protective adhesive layer 5 completely covers the pole tabs 1 in the width direction. The protective adhesive layer 5 covers the first welding print 2 and the fusing hole 4, and a spacing distance between the protective adhesive layer 5 and the second welding print 3 ranges from 1 mm to 2 mm, which can avoid explosive welding caused by the fact that the laser irradiates the protective adhesive layer 5 formed by an adhesive tape during a laser welding process.

## Claims

1. A core comprising a body (6) and a plurality of layers of pole tabs (1), wherein an end of the plurality of layers of pole tabs (1) is connected to the body (6), and another end of the plurality of layers of pole tabs (1) is configured to be connected to a pole post of a battery; wherein the plurality of layers of pole tabs (1) are welded to form a first welding print (2), and the first welding print (2) is disposed at a root of the pole tabs (1) and close to the body (6) to enable the plurality of layers of pole tabs (1) to gather up.

2. The core of claim 1, wherein a thickness of the first welding print (2) is defined as B₁, and a thickness of the body (6) is defined as B, wherein B₁ and B satisfy a following equation: Bi=B-Xi, and a value of X₁ ranges from 2 mm to 5 mm; and/or
a length of the first welding print (2) is defined as L₁, and a length of a welding print generated by a welding tool is defined as L, wherein L₁ and L satisfy a following equation: L₁=L+Y₁, and a value of Y₁ ranges from 4 mm to 6 mm.

3. The core of claim 1, wherein the plurality of layers of pole tabs (1) are welded to form a second welding print (3), the second welding print (3) and the first welding print (2) are spaced apart, and the pole tabs (1) are connected to the pole post through the second welding print (3).

4. The core of claim 3, wherein a spacing distance between the second welding print (3) and the first welding print (2) ranges from 4 mm to 6 mm.

5. The core of claim 3, wherein a length of the second welding print (3) and the length of the first welding print (2) are same; and/or
a width of the second welding print (3) is defined as C₂, a number of second welding prints (3) is defined as N, and a width of a welding print generated by the welding tool is defined as C, wherein C₂, N, and C satisfy a following equation: C₂=N*C+(N-1)*1.5+Z₂, and a value of Z₂ ranges from 2 mm to 4 mm.

6. The core of claim 3, wherein the pole tabs (1) are reshaped in a V-shape, and an angle is formed between the first welding print (2) and the second welding print (3).

7. The core of any one of claims 3-6, wherein when the pole tabs (1) are positive pole tabs (11), a fusing hole (4) is provided between the first welding print (2) and the second welding print (3).

8. The core of claim 7, wherein a cross-sectional area of an opening region of the fusing hole (4) is defined as A, a minimum cross-sectional area of the pole tabs (1) meeting an overcurrent current is defined as A₁, and a maximum cross-sectional area of the pole tabs (1) when fusing under a short-circuit current is defined as A₂, wherein A, A₁, and A₂ satisfy a following equation: A₁≤A≤A₂.

9. The core of any one of claims 3-6, wherein a protective adhesive layer (5) is attached onto the pole tabs (1) and a separator (63) of the body (6).

10. The core of claim 9, wherein a length of the protective adhesive layer (5) facing the pole tabs (1) and exceeding the separator (63) ranges from 15 mm to 30 mm, and a width of the protective adhesive layer (5) is not less than a width of the pole tabs (1); and/or
the protective adhesive layer (5) covers the first welding print (2) and the fusing hole (4), and a spacing distance between the protective adhesive layer (5) and the second welding print (3) ranges from 1 mm to 2 mm.

11. A power battery comprising a shell, a top cover assembly, and a core as claimed in any one of claims 1-10, wherein the core is disposed in an accommodation space formed by the shell and the top cover assembly, and the pole tabs (1) of the core are connected to the pole post on the top cover assembly.
